# EUROPÄISCHE PATENTANMELDUNG

(11) **EP 1 923 978 A2**
(43) Veröffentlichungstag der Anmeldung: **21.05.2008**
(21) Anmeldenummer: 07019117.6
(22) Anmeldetag: 28.09.2007
(51) Int. Cl.: H02K 7/116, B23B 23/04, H02K 21/22, H02K 7/14, H02K 9/06

(54) **Exzenterschleifmaschine mit bürstenlosem Motor**

(30) Priorität: 17.11.2006 DE 102006054267
(71) Anmelder: Festool GmbH, 73240 Wendlingen (DE)
(72) Erfinder: Steimel, Johannes, Dr., 73272 Neidlingen (DE)
(74) Vertreter: Bregenzer, Michael

(57) **Zusammenfassung**

Die Erfindung betrifft eine Handwerkzeugmaschine (10) mit einem bürstenlosen, einen Rotor (37) und einen Stator (34) aufweisenden Motor (11;) zum Antreiben einer Werkzeugspindel (12) mit einer Werkzeugaufnahme (13) zur Aufnahme eines Werkzeugs (14). Bei der Handwerkzeugmaschine (10) ist vorgesehen, dass der Rotor (37) ein bezüglich des Stators (34) außen angeordneter Außenläufer-Rotor (37) ist.

## Beschreibung

Die Erfindung betrifft eine Handwerkzeugmaschine mit einem bürstenlosen, einen Rotor und einen Stator aufweisenden Motor zum Antreiben einer Werkzeugspindel mit einer Werkzeugaufnahme zur Aufnahme eines Werkzeugs.

Ein solcher Elektromotor ist beispielsweise aus der US 2004/0017119 A1 bekannt. Der bürstenlose, beispielsweise elektronisch kommutierte Motor dient zum Antreiben einer Werkzeugspindel.

Aus der EP 1 628 387 A1 ist ein flach bauender bürstenloser Servomotor, in dessen Innenraum eine Aufnahme für ein Werkzeug angeordnet ist, bekannt.

Eine Handwerkzeugmaschine mit einem bürstenlosen Motor zum Antreiben einer Werkzeugspindel ist aus der US 6,866,105 B2 bekannt.

Zwar sind die Leistungswerte bei bürstenlosen, elektrisch kommutierten Motoren bereits besser als bei Motoren, die einen Kollektor mit Bürsten aufweisen. Dennoch ist es eine stetige Aufgabe bei der Werkzeugentwicklung, Motoren vorzusehen, die ein hohes Drehmoment aufweisen und zugleich einen guten Wirkungsgrad aufweisen.

Es ist daher die Aufgabe der vorliegenden Erfindung, die Drehmomentabgabe bei einem bürstenlosen Motor einer Handwerkzeugmaschine der eingangs genannten Art zu verbessern.

Zur Lösung der Aufgabe ist bei einer Handwerkzeugmaschine der eingangs genannten Art vorgesehen, dass der Rotor ein bezüglich des Stators außen angeordneter Außenläufer-Rotor ist.

Ein bekannter Innenläufer-Rotor mit den Magneten dreht sich in einem Innenraum des Stators, der eine Erregerspulenanordnung aufweist.

Die Erfindung schlägt nun vor, dass der Rotor ein Außenläufer-Rotor ist, das heißt der Rotor mit den Magneten dreht sich um einen innenliegenden, eine Erregerspulenanordnung aufweisenden Stator. Der Durchmesser des Luftspaltes ist verhältnismäßig groß, so dass die Drehmomentabgabe des Motors optimal ist. Ferner hat der vorteilhaft elektronisch kommutierte Motor einen hohen Wirkungsgrad und eine geringe Verlustleistung. Der Motor erwärmt sich in geringem Maße. Im Vergleich zu seinem Gewicht hat der Motor eine hohe Leistung. Ferner ist die Lebensdauer des bürstenlosen Motors gegenüber Varianten mit Bürsten verbessert.

Vorteilhaft ist weiterhin, dass durch die höhere Drehmomentabgabe die Werkzeugspindel durch den Rotor unmittelbar angetrieben werden kann. Die Werkzeugspindel kann beispielsweise einen Bestandteil des Rotors bilden. Der Motor bildet einen Direktantrieb.

Es ist aber auch denkbar, dass der Motor die Werkzeugspindel über ein Getriebe antreibt. Der Motor und das Getriebe können eine integrierte Baueinheit bilden. Der Motor mit seinem Außenläufer-Rotor hat ein großes Drehmoment, so dass das Getriebe verhältnismäßig klein und kompakt bauen kann. Das Getriebe kann beispielsweise in einem Handgriffsabschnitt oder in einem Handgriffbereich der Werkzeugmaschine angeordnet sein.

Eine zweckmäßige Variante sieht vor, dass das Getriebe ein Planetengetriebe ist. Der Rotor ist beispielsweise mit einem Sonnenrad oder mit einem Planetenträger des Planetengetriebes drehgekoppelt. Ferner kann der Rotor das Sonnenrad oder den Planetenträger umfassen.

Die Abtriebswelle des Motors und die Antriebswelle des Getriebes können einstückig sein.

Eine Abtriebswelle des Getriebes kann die Abtriebswelle des Motors durchdringen.

Der Motor, das Getriebe und die Werkzeugaufnahme können in Reihenrichtung nebeneinander angeordnet sein.

Eine vorteilhafte Variante der Erfindung sieht vor, dass die Werkzeugaufnahme und das Getriebe an einander entgegengesetzten Seiten des Stators angeordnet sind. Dadurch entsteht eine kompakte Baueinheit. Eine Abtriebswelle des Getriebes, die unmittelbar die Werkzeugspindel bilden kann oder mit dieser drehgekoppelt ist, kann den Motor durchdringen oder durchgreifen. Beispielsweise durchdringt die Abtriebswelle des Getriebes eine Hohlwelle des Motors und/oder den Stator, der eine Durchgangsöffnung für die Abtriebswelle aufweist.

Die Werkzeugspindel und/oder die Werkzeugaufnahme sind vorteilhaft zumindest teilweise in einem Innenraum des Stators angeordnet. Beispielsweise durchdringt oder durchgreift die Werkzeugspindel den Stator.

Es versteht sich, dass alternativ zu den vorgenannten Bauweisen auch eine Bauart denkbar ist, bei der die Abtriebswelle oder die Werkzeugspindel am Motor vorbei geführt sind.

Der Motor weist zweckmäßigerweise eine Hohlwelle auf, die die Motorwelle bildet. Weitere Wellen der Handwerkzeugmaschinen, beispielsweise eine Abtriebswelle des Getriebes, die Werkzeugspindel oder dergleichen, können zumindest abschnittsweise in der Motorwelle bzw. Hohlwelle angeordnet sein. Ferner ist es möglich, dass diese weitere Wellen bezüglich der Hohlwelle/Motorwelle des Motors exzentrisch sind.

Es ist ferner auch eine rohrartige Tragstruktur oder Statorstruktur des Stators möglich, die von einer Welle der Handwerkzeugmaschine durchdrungen ist.

Die Motorwelle kann vorteilhaft die Werkzeugspindel bilden, an der die Werkzeugaufnahme angeordnet ist. Beispielsweise kann ein Fräserkopf oder ein Bohrer, ein Schleifteller oder dergleichen in der Werkzeugaufnahme der Motorwelle gehalten werden. Die Werkzeugaufnahme kann an der Hohlwelle angeordnet sein. Ferner kann ein Hohlraum der Hohlwelle des Motors einen Bestandteil der Werkzeugaufnahme bilden.

Die Erregerspulenanordnung ist zweckmäßigerweise an einem Außenumfang einer rohrartigen Haltestruktur angeordnet.

Die Werkzeugspindel ist zweckmäßigerweise an einer an dem Stator angeordneten Werkzeugspindel-Lagerung drehbar angeordnet. Ferner ist es denkbar, dass die als Hohlwelle ausgestaltete Motorwelle oder eine Abtriebswelle des Getriebes an der rohrartigen Haltestruktur drehbar gelagert ist.

Die Werkzeugspindel-Lagerung und die Erregerspulenanordnung des Stators haben zweckmäßigerweise etwa dieselbe Längsposition in der Handwerkzeugmaschine. Die Werkzeugspindel-Lagerung weist mindestens ein Werkzeugspindel-Lager auf, dass an einem Außenumfang der Hohlwelle oder an einem Außenumfang der rohrartigen Haltestruktur des Stators angeordnet ist. Das Werkzeugspindel-Lager hat somit einen großen Durchmesser und dadurch günstige Verschleißeigenschaften.

Die Werkzeugspindel kann exzentrisch bezüglich eines Gehäuses der Handwerkzeugmaschine sein. Beispielsweise ist die Werkzeugspindel exzentrisch zu einer Hohlwelle, die zweckmäßigerweise die Motorwelle des Motors bildet. Die Werkzeugspindel ist beispielsweise exzentrisch in einem Innenraum oder Innenhohlraum der Hohlwelle angeordnet.

An dem Rotor oder der Werkzeugspindel ist zweckmäßigerweise ein Lüfterrad angeordnet, das zur Kühlung der Handwerkzeügmaschine und/oder zur Absaugung von Staub von einer durch die Handwerkzeugmaschine bearbeiteten Fläche dient. Es kann auch ein kombiniertes Lüfterrad vorgesehen sein, das beide Funktionen erfüllt. Beispielsweise sind Rippen an einander entgegengesetzten Flachseiten des Lüfterrades angeordnet, wobei die eine Seite zur Kühlung und die andere Seite zur Staubabsaugung vorgesehen ist. Ferner ist es möglich, dass ein solches Lüfterrad oder ein Paar solcher Lüfterräder dazu vorgesehen sind, einerseits das Getriebe und andererseits den Motor zu kühlen. Die Lüfterräder können direkt an den Rotor angebaut oder einstückig mit diesem sein.

Zweckmäßigerweise ist ein Lüfterrad oder ein Lüfterradpaar zwischen einem Getriebe und dem Motor angeordnet, so dass einerseits Getriebe-Kühlluft und andererseits Motorkühlluft erzeugt wird. Die jeweilige Kühlluft wird zweckmäßigerweise nach außen ausgeblasen, beispielsweise nach radial außen.

Eine vorteilhafte Variante der Erfindung sieht vor, dass die Handwerkzeugmaschine eine Motorkühlluftführung zur Kühlung des Motors aufweist. Diese führt Kühlluft am Stator vorbei oder durch den Stator hindurch. Dabei wird vorzugsweise die Erregerspulenanordnung des Stators gekühlt. Beispielsweise sind zwischen den Spulen oder zwischen einem Kern des Stators und den Spulen Lüftungskanäle vorgesehen. Zweckmäßigerweise ist die Kühlluft dabei so geführt, dass der größere Anteil der Kühlluft durch den Stator bzw. durch die Erregerspulenanordnung geführt ist, wohingegen die Magnete des Rotors nicht oder in kleinerem Umfang gekühlt werden.

Ferner ist vorteilhaft eine Getriebekühlluftführung vorgesehen, die zur Kühlung des optional vorhandenen Getriebes dient. Die Getriebekühlluft ist zweckmäßigerweise durch gegenüber den beweglichen Teilen des Getriebes geschlossene Kanäle geführt, beispielsweise im Gehäuse des Getriebes bzw. der Handwerkzeugmaschine. Die Kühlluft durchströmt die beweglichen Teile des Getriebes vorteilhaft somit nicht, so dass diese vor Umwelteinflüssen geschützt sind und insbesondere nicht verschmutzen.

Zweckmäßigerweise ist zwischen den Kühlluftführungen der Handwerkzeugmaschine eine Dichtungsanordnung angeordnet, die ein Vermischen der Luftströme zumindest teilweise verhindert. Somit wird verhindert, dass Staub oder sonstige schädliche Einflüsse, in bewegliche Bereiche der Handwerkzeugmaschine gelangen. Beispielsweise sind eine Getriebe-Kühlluftführung und eine Motor-Kühlluftführung durch eine solche Dichtungsanordnung voneinander getrennt.

Der Rotor weist beispielsweise eine becherartige oder ringartige Haltestruktur auf, die die Magnete hält. Der Stator ist in einem Innenraum der Rotorstruktur angeordnet.

Nachfolgend werden Ausführungsbeispiele der Erfindung anhand der Zeichnung erläutert. Es zeigen:
- Figur 1: eine Querschnittsansicht eines ersten Ausführungsbeispiels einer Handwerkzeugmaschine in Gestalt eines Exzentertellerschleifers oder einer Exzentertellerpoliermaschine,
- Figur 2: ein zweites Ausführungsbeispiel als eine Variante der Handwerkzeugmaschine gemäß Figur 1 mit einer modifizierten Werkzeugspindel-Lagerung,
- Figur 3a: eine Querschnittsansicht einer Blockiervorrichtung der Handwerkzeugmaschine gemäß Figur 1 in Freigabestellung,
- Figur 3b: die Blockiervorrichtung gemäß Figur 3a in Blockierstellung,
- Figur 3c: die Blockiervorrichtung gemäß Figuren 3a, 3b von oben,
- Figur 4a: eine schematische untere Ansicht der Blockiervorrichtung gemäß Figuren 3a, 3b, 3c, wobei ein Blockierteil und eine Feststelleinrichtung außer Eingriff sind,
- Figur 4b: eine Drehstellung des Blockierteils gemäß Figur 4a, bei der eine erste Blockieranordnung der Feststelleinrichtung und des Blockierteils in Eingriff sind,
- Figur 4c: eine Blockierstellung, bei der zwei Blockieranordnungen in Eingriff sind,

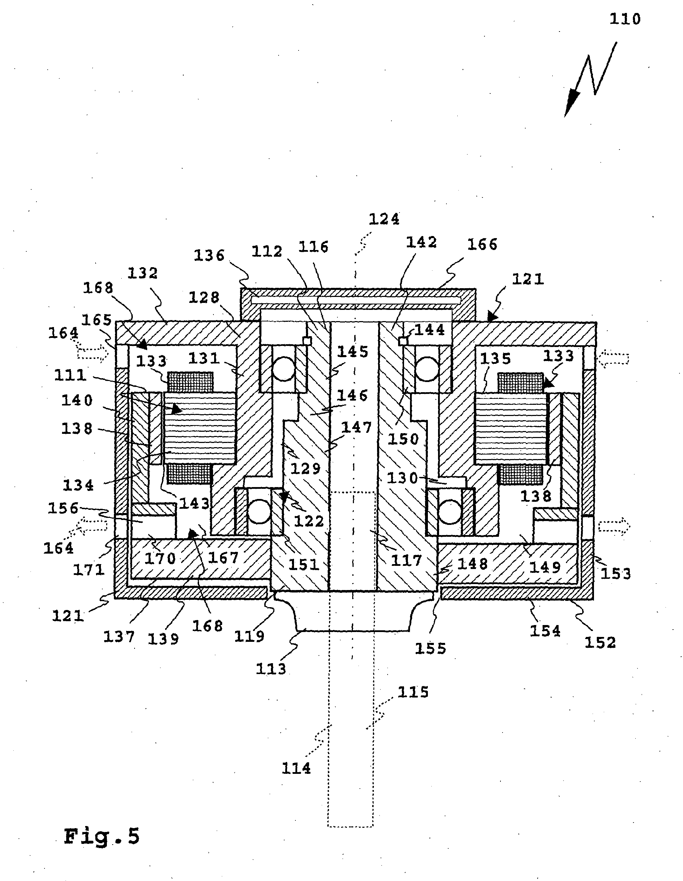

- Figur 5: eine schematische Querschnittsansicht eines dritten Ausführungsbeispiels einer Handwerkzeugmaschine mit einem bürstenlosen Motor als Direktantrieb, und

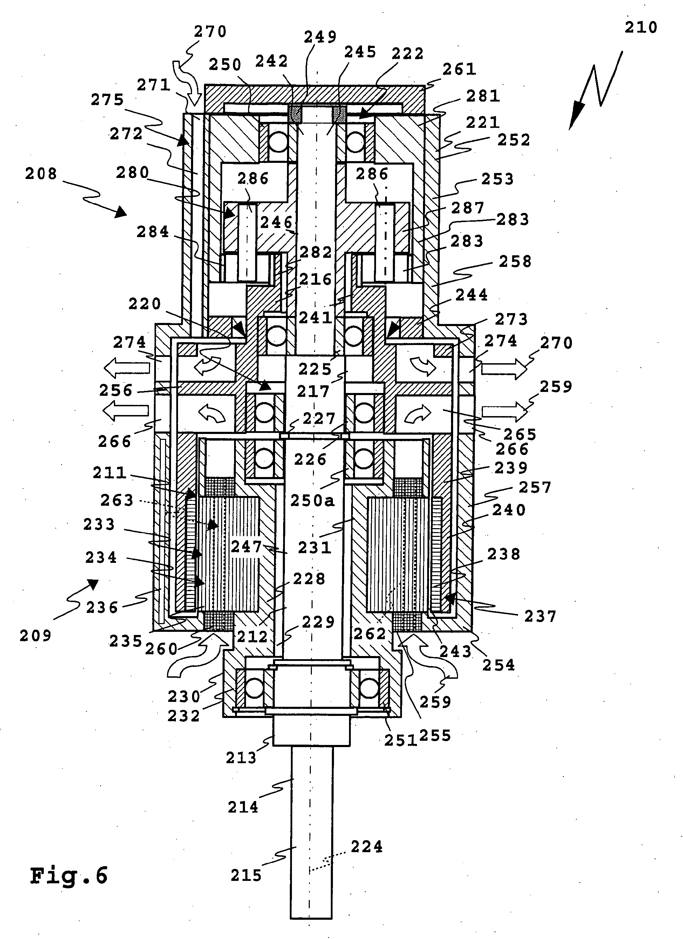

- Figur 6: eine Querschnittsansicht eines vierten Ausführungsbeispiels einer Werkzeugmaschine mit einem bürstenlosen Motor, der über ein Planetengetriebe eine Werkzeugspindel antreibt.

Soweit bei den nachfolgenden Ausführungsbeispielen gleiche oder gleichartige Bauteile vorhanden sind, sind diese mit denselben Bezugszeichen versehen und werden nicht im Einzelnen mehrfach erläutert.

Eine Handwerkzeugmaschine 10, beispielsweise eine Exzenterschleifmaschine oder Exzenterpoliermaschine, weist einen bürstenlosen Motor 11 zum Antreiben einer Werkzeugspindel 12 auf. Am unteren Ende der Werkzeugspindel 12 ist eine Werkzeugaufnahme 13 zum Halten eines Werkzeuges 14, beispielsweise eines Schleiftellers 15, angeordnet. Der Motor 11 treibt eine Hohlwelle 16 an, in deren Hohlraum oder Innenraum 17 die Werkzeugspindel 12 zumindest abschnittsweise angeordnet ist. Der Innenraum 17 erstreckt sich über die gesamte Länge der Hohlwelle 16, die an ihren Enden offen ist. Die Werkzeugspindel 12 steht an einem oberen Endbereich 18 und einem unteren Endbereich 19 der Hohlwelle 16 vor diese vor.

Die Hohlwelle 16 ist mit einer Hohlwellenlagerung 20 bezüglich eines Gehäuses 21 der Handwerkzeugmaschine 10 drehbar gelagert. Die Werkzeugspindel 12 wiederum ist mit einer Werkzeugspindel-Lagerung 22 an der Hohlwelle 16 drehbar gelagert.

Eine Drehachse 24 der Werkzeugspindel 12 weist eine Exzentrizität e zu einer Drehachse 23 der Hohlwelle 16 auf.

Der Motor 11 treibt die Hohlwelle 16 zu einer Drehbewegung an, die die Hohlwelle 16 über eine Kopplungsanordnung 9 zumindest teilweise auf die Werkzeugspindel 12 überträgt. Der Motor 11 bildet einen Direktantrieb zum Antreiben der Hohlwelle 16. Die Hohlwelle 16 und die Kopplungsanordnung 9 bilden einer Art Getriebe für die Werkzeugspindel 12. Die Kopplungsanordnung 9 umfasst die Werkzeugspindel-Lagerung 22. Die Hohlwelle 16 nimmt die Werkzeugspindel 12 aufgrund von Reibung bei der Werkzeugspindel-Lagerung 22 mit. Die Werkzeugspindel-Lagerung 22 ist unter anderem durch Fliehkräfte belastet. Beispielsweise ist dadurch in Werkzeugspindel-Lagern 50, 51 Reibung vorhanden.

Die Werkzeugspindel 12 dreht sich um die Drehachse 23 und mit einer überlagerten, um die Exzentrizität e versetzten Drehbewegung um die Drehachse 24. Im vorliegenden Fall ist die Exzentrizität e durch eine außermittige Anordnung des Hohlraums oder Innenraums 17 bezüglich der Drehachse 23 der Hohlwelle 16 realisiert. Es versteht sich, dass auch bei einem zentrischen Hohlraum einer Hohlwelle durch eine geeignete Lagerung der Werkzeugspindel bezüglich der Hohlwelle eine Exzentrizität realisierbar ist.

Die Drehzahl der Werkzeugspindel könnte aufgrund der Kopplungsanordnung 9 die Drehzahl der Hohlwelle 16 erreichen. Die Drehzahl der Werkzeugspindel 12 ist jedoch vorzugsweise geringer als die Drehzahl der Hohlwelle 16. Bei der Handwerkzeugmaschine 10 ist daher eine zwischen dem Gehäuse 21 und der Werkzeugspindel 12 wirksame Bremsanordnung 25 mit einer Wirbelstrombremse realisiert, bei der ein mit der Werkzeugspindel 12 drehfest gekoppeltes metallisches Wirbelstromelement 26 und drehfeste, am Gehäuse 21 angeordnete Magnete 27 zusammenwirken. Die Magnete 27 sind beispielsweise an einem oberen Kragenbereich einer Stützhülse 49 des Gehäuses 21 angeordnet und erzeugen Wirbelströme in dem Wirbelstromelement 26, das beim Ausführungsbeispiel durch einen Lagerhalter 29 einer Lagerhalteanordnung 30 gebildet ist. Der Lagerhalter 29 ist am oberen Endbereich 32 der Werkzeugspindel 12 beispielsweise mit einer Mutter 31 drehfest festgelegt. Ferner ist denkbar, zur Realisierung einer Bremsanordnung andere Bremskonzepte vorzusehen, z.B. Reibabschnitte an einer Werkzeugspindel in der Art der Werkzeugsspindel 12, die an gehäusefesten Reibabschnitten reiben und so die Werkzeugspindel bremsen. Z.B. könnten anstelle der Magnete 27 Reibelemente vorgesehen sein, an denen ein Abschnitt des Lagerhalters 29 reibt.

Der Motor 11 ist ein bürstenloser, elektronisch kommutierter Antriebsmotor. Der Motor 11 ist ein Außenläufermotor. Eine Erregerspulenanordnung 33 eines Stators 34 des Motors 11 ist außen an einem Statorkörper oder einer Statorstruktur 28 angeordnet. Ein Blechpaket 35 sitzt beispielsweise am Außenumfang der Statorstruktur 28. Die Erregerspulen der Erregerspulenanordnung 33 sind am Blechpaket 35 angeordnet und erzeugen durch Bestromung mit einer Bestromungseinrichtung 36 ein Drehfeld. Dieses Drehfeld wirkt auf einen Rotor 37, der als ein Außenläufer-Rotor ausgestaltet ist.

Magnete 38, beispielsweise Permanentmagnete, des Rotors 37 sind radial außen bezüglich des Stators an einem Rotorkörper oder einer Rotorstruktur 39 angeordnet, beispielsweise an einem becherartig hochstehenden, zylindrischen Umfangsabschnitt 40 der Rotorstruktur 39. Anstelle des wandartigen Umfangsabschnitts 40 könnten auch beispielsweise Haltestege, eine Käfigstruktur etc. zum Halten der Magnete 38 vorgesehen sein.

Ein unterer Bereich 41 der Rotorstruktur 39 ist drehfest mit der Hohlwelle 16 verbunden. Die Hohlwelle 16 wird vom Rotor 37 unmittelbar angetrieben und bildet eine Abtriebswelle 42 des Motors 11. Die Abtriebswelle 42 ist im Innenraum des Stators 34 angeordnet. Der Rotor 37 liegt radial bezüglich der Abtriebswelle 42 weit außen, sodass ein Luftspalt 53a zwischen den Magneten 38 und der Erregerspulenanordnung 33 einen großen Durchmesser hat und der Motor 11 ein hohes Drehmoment erzeugen kann. Dennoch baut die Handwerkzeugmaschine 10 sehr kompakt. Aufgrund des hohen Drehmoments des Motors 11 ist kein Getriebe zum Antreiben der Hohlwelle 16 erforderlich.

Ein oberes und ein unteres Lager 43, 44 der Hohlwellenlagerung 20 sind im Bereich des Motors 11 angeordnet. Die Hohlwelle 16 hat eine gestufte Struktur, sodass man auch von einer Stufenwelle sprechen kann. Die Außendurchmesser der Hohlwelle 16 nehmen von einem oberen Endabschnitt 45 zu einem oberen Abschnitt 46 über einen mittleren Abschnitt 47 bis zu einem unteren Endabschnitt 48 der Hohlwelle 16 stufenweise zu.

Das untere Lager 44 sitzt am unteren Ende des mittleren Abschnittes 47 an der Hohlwelle 16 und stützt sich außenseitig an der Statorstruktur 28 ab. Das untere Lager 44 sitzt an der Stufe zwischen dem mittleren Abschnitt 47 und dem unteren Endabschnitt 48. Das obere Lager 43 der Hohlwellenlagerung 20 sitzt an der Stufe zwischen dem oberen Endabschnitt 45 und dem mittleren Abschnitt 46. Außenseitig stützt sich das obere Lager 43 an einer Stützstruktur oder Stützhülse 49 ab, die in die Statorstruktur 28 eingesteckt ist und sich an dieser abstützt.

Ein oberes und ein unteres Lager 50, 51 der Werkzeugspindel-Lagerung 22 sind im Bereich der oberen und unteren Endabschnitte 45, 48 der Hohlwelle 16 angeordnet. Das obere Werkzeugspindel-Lager 50 ist bezüglich der Hohlwelle 16 ein Außenlager, das untere Werkzeugspindel-Lager 51 ein Innenlager für die Werkzeugspindel 12. Die beiden Hohlwellen-Lager 43, 44 sind vorteilhaft zwischen den Werkzeugspindel-Lagern 50, 51 angeordnet.

Das untere Lager 51 befindet sich an einem Innenumfang der Hohlwelle 16, nämlich in einer Aufnahme 52 der Hohlwelle 16. Die Aufnahme 52 ist durch einen erweiterten Abschnitt des Innenraumes 17 der Hohlwelle 16 gebildet.

Das obere Lager 50 hat einen größeren Durchmesser als das untere Lager 51. Das obere Lager 50 sitzt an einem Außenumfang 53 der Hohlwelle 16, nämlich am oberen Endabschnitt 45. Die Lagerhalteanordnung 30, die drehfest mit der Werkzeugspindel 12 verbunden ist, hält das obere Lager 50 an seinem Außenumfang. Die Lagerhalteanordnung 30 steht vor das obere Längsende bzw. den Endbereich 18 der Hohlwelle 16 radial vor und hält einen äußeren Lagerring 73 des oberen Werkzeugspindel-Lagers 50. An einem oberen, scheibenartigen Plattenabschnitt 55 des Lagerhalters 29 ist unten ein zylindrischer Umfangsabschnitt 54 angeordnet, der den Lagerring 73 hält.

Die Rotorstruktur 39 umfasst ein Lüfterrad, das an der Abtriebswelle 42, die durch die Hohlwelle 16 gebildet ist, angeordnet ist. Das Lüfterrad 56 erzeugt einen Absaug-Luftstrom 57 zum Absaugen von Staub von einer durch die Handwerkzeugmaschine 10 bearbeiteten Fläche f, beispielsweise einer Holzoberfläche. Der Absaug-Luftstrom 57 tritt durch Öffnungen 58 am Werkzeug 14 in einen Absaugluftraum 59 unterhalb des Lüfterrades 56 ein und wird durch Luftführungsabschnitte oder Luftkanäle 60 am Lüfterrad 56 in einen Absaugkanal 61 des Gehäuses 21 sozusagen ausgeblasen. An den Absaugkanal 61 ist ein Auffangbehälter, beispielsweise ein Staubsack oder dergleichen, anschließbar. Zwischen dem Werkzeug 14 und dem unteren Abschnitt des Gehäuses 21 ist zweckmäßigerweise eine Dichtung 62 angeordnet, sodass der Absaug-Luftstrom 57 nicht aus dem Absaugluftraum 59 austritt. Die Luftkanäle 60 sind winkelig, wobei sich ein Abschnitt etwa parallel zu den Drehachsen 23, 24 erstreckt und ein zweiter Abschnitt nach radial außen führt, wo er in den Absaugkanal 61 mündet, wenn der jeweilige Luftkanal 60 mit dem Absaugkanal 61 bei einer geigneten Drehstellung des Lüfterrades 56 fluchtet.

Das Lüfterrad 56 erzeugt ferner einen Motor-Kühlluftstrom 64 zur Kühlung des Motors 11. Der Kühlluftstrom 64 tritt durch Öffnungen 65 an einem Deckel 66 des Gehäuses 21 ein und strömt von dort weiter durch Kühlkanäle 67 einer Motor-Kühlluftführung 68 zum Motor 11. Die Kühlkanäle 67 sind am Gehäuse 21 ausgebildet und erstrecken sich etwa parallel zu den Drehachsen 23, 24. Die Kühlkanäle 67 führen unmittelbar zu der Erregerspulenanordnung 33, sodass im Wesentlichen die Erregerspulen gekühlt werden. Kühlkanäle 69 führen aus der Erregerspulenanordnung 33 heraus. Die Kühlkanäle 67, 69 erstrecken sich parallel zu den Drehachsen 23, 24, sodass der Kühlluftstrom 64 im Bereich der Erregerspulenanordnung 33 etwa parallel zu den Drehachsen 23, 24 verläuft. Rippen 70 an der Oberseite des Lüfterrades 56 erzeugen den Motor-Kühlluftstrom 64, der durch radial äußere Öffnungen 71 im unteren Bereich des Gehäuses 21 aus dem Gehäuse 21 austritt.

Die Bestromungseinrichtung 36 kann die jeweilige Drehposition des Rotors 37 auf elektronischem Weg abtasten. Ferner ist es denkbar, dass beispielsweise eine Positions-Magnetanordnung 63 am Rotor 37 angeordnet ist, beispielsweise unterhalb der Luftkanäle 60, sodass ein Sensor 63' die jeweilige Drehposition des Rotors 37 mit Hilfe der Magnete 63 erfassen kann.

Ein oberer Bereich des Gehäuses 21 dient als Handgriffbereich. Unterhalb dieses Handgriffbereiches strömt die Kühlluft 68 aus dem Gehäuse 21 aus, sodass sie einen Bediener der Handwerkzeugmaschine 10 nicht beeinträchtigt. Eine Griffmulde 72 am Außenumfang des Gehäuses 21 erleichtert das Ergreifen des Gehäuses 21. Ein Bediener kann die Handwerkzeugmaschine 10 von oben ergreifen und mit seinen Fingern in die Griffmulde 72 eingreifen. Die Handwerkzeugmaschine liegt somit gut in der Hand. Im Bereich der Griffmulde 72 kann ein Schalter zum Einschalten des Motors 11 vorgesehen sein.

Aber auch sonst ist die Handhabung der Handwerkzeugmaschine 10 bequem. So dient beispielsweise zum Wechseln des Werkzeugs 14 an der Werkzeugaufnahme 13 eine Blockiervorrichtung 75, die die Werkzeugspindel drehfest blockiert, sodass die Werkzeugspindel 12 bewegungsfest ist, während der Bediener das Werkzeug 14 an der Werkzeugaufnahme 13 wechselt. Die Werkzeugaufnahme 13 enthält beispielsweise ein Schraubgewinde, ein Bajonett, Rastmittel oder sonstige Befestigungsmittel zum Befestigen des Werkzeugs 14.

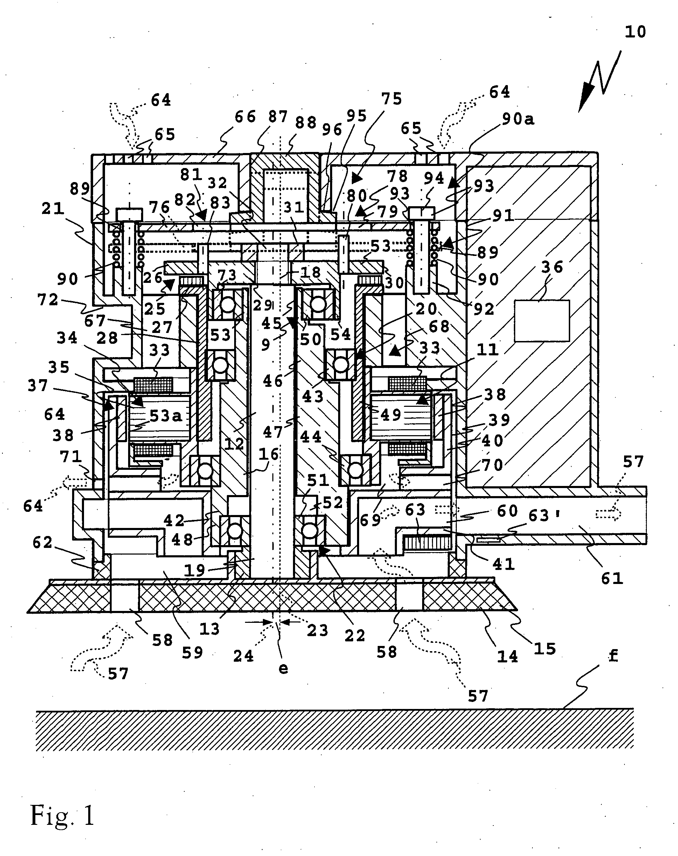

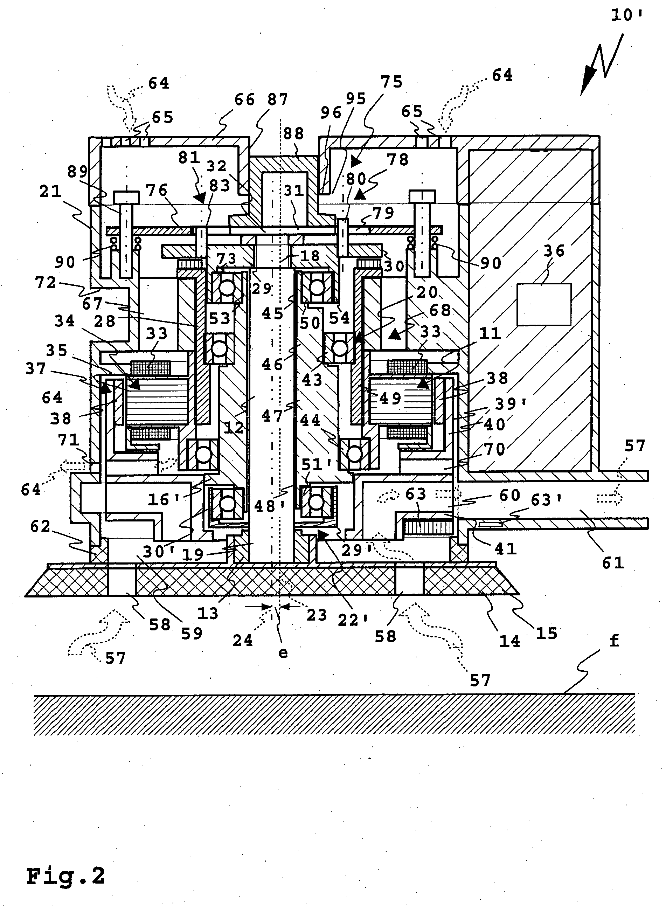

Eine Feststelleinrichtung 76, die zwar drehfest bezüglich der Drehachsen 23, 24 ist, aber am Gehäuse 21 beweglich gelagert ist, ist zwischen einer Freigabestellung (in Figur 1 mit durchgezogenen Linien gezeichnet) und einer in Figur 2 dargestellten Blockierstellung (in Figur 1 gestrichelt gezeichnet) beweglich. Beim Verlagern der Feststelleinrichtung 76 in Richtung der Blockierstellung greifen nacheinander ein erster Blockiervorsprung 80 einer ersten Blockieranordnung 78 in eine erste Blockieraufnahme 79 und sodann ein zweiter Blockiervorsprung 83 in eine zweite Blockieraufnahme 82 einer zweiten Blockieranordnung 81 ein. Die Blockiervorsprünge 80, 83, beispielsweise Stifte oder Dorne, sind an einem Blockierteil 77 angeordnet, das mit der Werkzeugspindel 12 bewegungsgekoppelt ist, vorliegend drehfest an der Werkzeugspindel 12 angeordnet ist. Es versteht sich, dass zwischen einem Blockierteil und der Werkzeugspindel auch beispielsweise ein Getriebe oder eine sonstige Mitnahmeeinrichtung zur Bewegungskopplung vorgesehen sein können. Das Blockierteil 77 ist vorliegend plattenartig. Das Blockierteil 77 wird durch den am oberen Ende der Werkzeugspindel 12 angeordneten Lagerhalter 29 gebildet. Vor den Lagerhalter 29 stehen die Blockiervorsprünge 80, 83 nach oben parallel zu den Drehachsen 23, 24 vor. Die Blockieraufnahmen 79, 82 sind durch Ausnehmungen 84, 85 einer Platte 86 der Feststelleinrichtung 76 gebildet.

Die Feststelleinrichtung 76 ist entgegen der Federkraft von Federn 90 einer Rückstelleinrichtung 91 von der Freigabestellung in die Blockierstellung beweglich. Beispielsweise kann ein Bediener die Feststelleinrichtung 76 mit einer Betätigungshandhabe 88, zum Beispiel einen Betätigungsknopf, der durch eine Öffnung 87 am Gehäuse 21 beziehungsweise am Deckel 66 zugänglich ist, in Richtung des Blockierteils 77 verlagern.

Eine Führungseinrichtung 90a mit Führungselementen 89 führt die Feststelleinrichtung 76 linear parallel zu den Drehachsen 23, 24. Die Führungselemente 89 sind beispielsweise Bolzen, die an zweckmäßigerweise vorstehende Abschnitte oder Halterungen 92 des Gehäuses 21 angeschraubt sind. Die Federn 90 stützen sich einerseits an den Halterungen 92 und andererseits an der Feststelleinrichtung 76 ab. Die Führungselemente 89 durchdringen die Feststelleinrichtung 76 an Führungsöffnungen 93. Vorsprünge 94 an den Führungselementen 89, beispielsweise Schraubenköpfe, begrenzen den Verstellweg der Feststelleinrichtung in Richtung der Freigabestellung. Ferner sind an der Betätigungshandhabe 88 Anschläge 95, beispielsweise ein Kragenabschnitt oder radial vorstehende Vorsprünge, vorgesehen, die in der Freigabestellung der Feststelleinrichtung 76 an Anschläge 96 des Gehäuses 21, beispielsweise an Anschläge im Bereich der Öffnung 87, anschlagen. Auch dadurch wird der Hub der Feststelleinrichtung 76 in Richtung der Freigabestellung begrenzt.

Das Blockierteil 77 ist um die Drehachse 23 der durch den Motor 11 angetriebenen Hohlwelle 16 und zudem um die Drehachse 24 der Werkzeugspindel 12 drehbar, wobei die Drehachse 24 der Werkzeugspindel 12 zur Drehachse 23 der Hohlwelle 16 um die Exzentrizität e exzentrisch ist. Eine Exzentrizität erschwert an sich eine Bedienung einer Blockiervorrichtung. Insbesondere ist ein drehfestes Festlegen der Werkzeugspindel für den Werkzeugwechsel mit bekannten Blockiervorrichtungen nicht möglich. Mit der Blockiervorrichtung 75 kann die Werkzeugspindel 12 hingegen bequem drehfest blockiert werden.

Beim Verlagern der Feststelleinrichtung 76 von der Freigabestellung in Richtung der Blockierstellung greift bei einem ersten Bewegungsabschnitt zunächst der Blockiervorsprung 80 in die Blockieraufnahme 79 ein. Der Blockiervorsprung 80 steht weiter vor den Plattenabschnitt 55 des Blockierteils 77 nach oben vor, sodass er in seine zugeordnete Blockieraufnahme 79 eingreift, bevor in einem zweiten Bewegungsabschnitt der kürzere Blockiervorsprung 83 in seine zugeordnete Blockieraufnahme 82 eingreift.

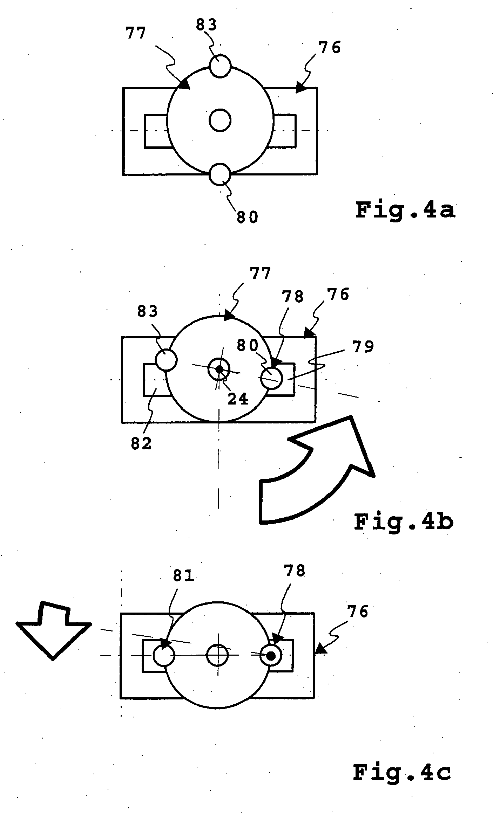

Die erste Blockieranordnung 78 bildet eine Art Fang-Blockieranordnung, das heißt, der Pin oder Blockiervorsprung 80 greift in die Blockieraufnahme 79 ein. Diese ist beispielsweise in Figur 4b schematisch dargestellt. Sodann wird das Blockierteil 77, das oben fest an der Werkzeugspindel 12 sitzt, beispielsweise durch Drehen an der Werkzeugspindel 12 so lange weiterbewegt, bis die Blockieraufnahme 82 und der Blockiervorsprung 83 einander gegenüberstehen und einrasten können. Durch die feste Koppelung der Werkzeugspindel 12 mit dem Blockierteil 77 ist das Blockierteil 77 um beide Drehachsen 23, 24 drehbeweglich und somit exzentrisch gelagert. Durch Drehen der Werkzeugspindel 12, beispielsweise durch Ergreifen des Werkzeugs 14, ist es möglich, die beiden Blockieranordnungen 78, 81 sequenziell in ihre Eingriffsposition zu verlagern. Der Bediener drückt zum Blockieren der Werkzeugspindel 12 auf die Betätigungshandhabe 88 und dreht an der Werkzeugspindel 12 so lange, bis die Feststelleinrichtung 76 in der Blockierstellung ist und das Blockierteil 77 drehfest festlegt. Dann kann das Werkzeug 14 bequem gewechselt werden, da die Werkzeugaufnahme 13 in jeder Drehrichtung drehfest festgelegt ist.

An der Platte 86 der Feststelleinrichtung 76 ist eine Aufnahme 97 vorgesehen, beispielsweise eine Durchtrittsöffnung, in die die Mutter 31 an der Werkzeugspindel 12 in der Blockierstellung eindringen kann. Die Aufnahme 97 ist aufgrund der Exzentrizität e zweckmäßigerweise so groß, dass ein freies Bewegungsspiel der Werkzeugspindel 12 innerhalb der Aufnahme 97 gewährleistet ist.

Die Ausnehmungen 84, 85 für die Blockiervorsprünge 80 und 83 hingegen sind bezüglich der Drehrichtung(en) des Blockierteils 77 zweckmäßigerweise enger, sodass in der Blockierstellung die Blockiervorsprünge 80, 83 möglichst spielfrei in den Blockieraufnahmen 79, 82 aufgenommen sind.

Nun wäre es möglich, die Blockieraufnahmen so zu gestalten, dass nur in einer einzigen Drehposition beziehungsweise Exzenterposition ein Eingreifen der Blockieranordnung 78, 81 möglich ist. Bei der Feststelleinrichtung 76 hingegen sind die Blockieraufnahmen 79, 82 gleichartig und haben die gleiche Anordnung Geometrie, sodass jeder der Blockiervorsprünge 80, 83 in jede der Blockieraufnahmen 79, 82 passt.

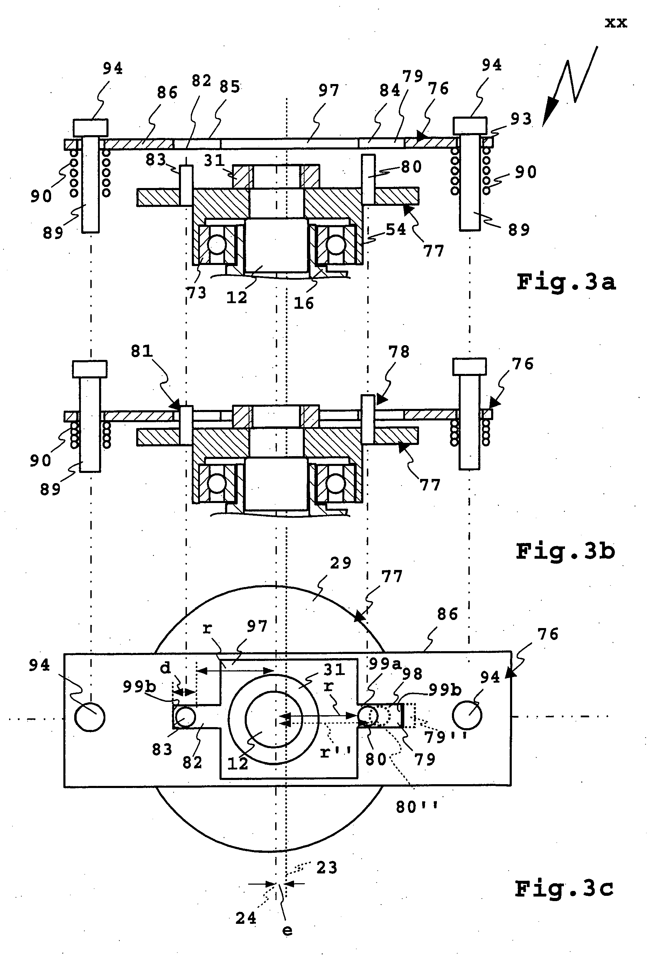

Die Blockieraufnahmen.79, 82 sind beispielsweise Langlöcher oder Längsaufnahmen 98, die sich quer zur Drehachse 24 des Blockierteils 77 erstrecken. Vorliegend erstrecken sich die Längsaufnahmen 98 von der zentralen Aufnahme 97 nach radial außen weg. Die Längsaufnahmen 98 haben eine Längserstreckungslänge, die dem Durchmesser d der Blockiervorsprünge 80, 83 und zusätzlich einem doppelten Exzenterabstand e entspricht. Bei dem Blockierteil 77 sind die beiden Blockiervorsprünge 80, 83 jeweils in einem Abstand r bezogen auf die radial innere Seite der VBlockiervorsprünge 80, 83 von der Drehachse 24 des Blockierteils 77 entfernt. Dieser Abstand r definiert einen radial inneren Endbereich 99a der Längsaufnahmen 98, wo sich in Figur 3c z.B. der Blockiervorsprung 80 befindet, sowie einen erforderlichen radial äußeren Endbereich 99b, wo sich der Blockiervorsprung 83 befindet. Ein radial äußeres Ende der Längsaufnahmen 98 wird durch den Abstand r und zusätzlich den Durchmesser d der jeweiligen Blockiervorsprünge 80, 83, definiert.

Es versteht sich, dass anstelle eines einzigen, gleichen Abstandes r der Blockieraufnahmen 79, 82 bezüglich der Drehachse 24 des Blockierteils 77 auch unterschiedliche Abstände vorgesehen sein können. Beispielsweise ist ein zu dem Blockiervorsprung 80 alternativer Blockiervorsprung 80" mit einem Radialabstand r" von der Drehachse 24 entfernt. Korrespondierend dazu ist eine als Längsaufnahme ausgestaltete Blockieraufnahme 79 ' ' ebenfalls mit dem Abstand r'' zu der Drehachse 24 am Blockierteil 77 angeordnet.

Gleiche oder gleichartige Teile der Handwerkzeugmaschinen 10 und einer in Figur 2 dargestellten Handwerkzeugmaschine 10' sind mit denselben Bezugszeichen versehen und werden nicht näher erläutert.

Im Unterschied zur Handwerkzeugmaschine 10 ist bei der Handwerkzeugmaschine 10' eine Werkzeugspindel-Lagerung 22' vorgesehen, bei der nicht nur das obere Lager 50, sondern auch ein unteres Werkzeugspindel-Lager 51' als ein Außenlager ausgestaltet ist. Das Lager 51' sitzt am Außenumfang eines unteren Endabschnitts 48' ein Werkzeugspindel 12'. Der Endabschnitt 48' hat einen geringeren Außendurchmesser als der Endabschnitt 48. Ansonsten gleicht die Hohlwelle 16' der Hohlwelle 16. Der äußere Lagerring 73' des Werkzeugspindel-Lagers 51' wird von einem Lagerhalter 29' gehalten. Der Lagerhalter 29' ist becherartig und bildet eine Lagerhalteanordnung 30' zum Halten eines Werkzeugspindel-Lagers. Der Lagerhalter 29' ist drehfest an der Werkzeugspindel 12 angeordnet. Somit sind beide Werkzeugspindel-Lager 50, 51' Außenlager, die am Außenumfang der Hohlwelle 16' angeordnet sind und so optimal Lagerkräfte aufnehmen können. In der Praxis ist es ohne weiteres möglich, den Durchmesser des unteren Werkzeugspindel-Lagers 51' größer auszugestalten, wobei dann eine andere Ausgestaltung des Lüfterrades 56 beziehungsweise der Absaugluftführung erforderlich ist.

Bei einer Handwerkzeugmaschine 110 treibt ein bürstenloser Motor 111 eine Werkzeugspindel 112 an. Der Motor 111 ist elektronisch kommutiert. Die Werkzeugspindel 112 wird durch eine Hohlwelle 116 gebildet, an deren in der Zeichnung unteren, werkzeugseitigen Längsende 119 eine Werkzeugaufnahme 113 angeordnet ist. Von der Werkzeugaufnahme 113, die beispielsweise als eine Art Bohrfutter ausgestaltet ist, wird ein Werkzeug 114 gehalten, beispielsweise ein Bohrwerkzeug 115 oder ein Schraubwerkzeug. Das Werkzeug 114 könnte auch eine Trennscheibe, eine Schleifscheibe, ein Bohrmeißel oder dergleichen sein. Das Werkzeug 114 kann sich bis in einen Innenraum 117 der Hohlwelle erstrecken. Somit bildet die Hohlwelle 116 zumindest einen Teil der Werkzeugaufnahme 13.

Der Motor 111 treibt die Werkzeugspindel 112 direkt, d.h. getriebelos an. Die Werkzeugspindel 112 bildet eine Abtriebswelle 142 des Motors 111.

Die Werkzeugspindel 112 ist mit einem oberen und einem unteren Lager 150, 151 einer Werkzeugspindel-Lagerung 122 bezüglich eines Gehäuses 121 der Handwerkzeugmaschine 110 um eine Drehachse 124 drehbar gelagert. Die Werkzeugspindel 112 ist in einem Innenraum 129 eines Statorkörpers oder einer Statorstruktur 128 des Motors 111 angeordnet. Der Innenraum 129 wird durch eine Umfangswandung 131 der Statorstruktur 128 begrenzt.

Die Werkzeugspindel-Lager 150, 151 sitzen an der Werkzeugspindel 112 und stützen sich an Innenseiten der Umfangswandung 131 ab.

Die Werkzeugspindel 112 hat eine gestufte Außenkontur, sodass man sie als eine Stufenspindel bezeichnen kann. Korrelierend mit der Stufenstruktur der Werkzeugspindel 112 hat auch der Innenraum 129 eine gestufte Innenkontur, das heißt Abschnitte mit größeren oder kleineren Durchmessern. Beispielsweise sitzt das obere Werkzeugspindel-Lager 150 an einem oberen Endabschnitt 145 der Werkzeugspindel 112 mit einem kleinen Durchmesser. Das Lager 150 wird durch einen Sprengring 144 sowie eine Stufe zwischen dem Endabschnitt 145 und einem oberen Abschnitt 146 der Werkzeugspindel 112 gehalten, der einen größeren Durchmesser als der Endabschnitt 145 aufweist. Ein mittlerer Abschnitt 147 der Werkzeugspindel 112 hat einen gegenüber dem Abschnitt 146 größeren Durchmesser. Am Abschnitt 147 sitzt das untere Werkzeugspindel-Lager 151, das somit einen größeren Durchmesser als das obere Lager 150 hat. Zur Aufnahme des größeren Lagers 151 hat der Innenraum 129 in seinem unteren Endbereich 130 einen größeren Innendurchmesser. Das Lager 151 stützt sich an einer Stufe zwischen dem mittleren Abschnitt 147 und einem unteren Endabschnitt 148 der Werkzeugspindel 112 ab, der einen größeren Durchmesser aufweist als der mittlere Abschnitt 147 hat.

Am Außenumfang der zylindrischen Umfangswandung 131 ist eine Erregerspulenanordnung 133 eines Stators 134 des Motors 111 angeordnet. Die Erregerspulen 133 sind an einem Blechpaket 135 angeordnet, das am Außenumfang der Umfangswandung 131 sitzt.

Die Werkzeugspindel 112 ist in platzsparender Weise in einem Innenraum des Stators 134 angeordnet. Die Handwerkzeugmaschine 110 baut kompakt.

Ein Rotorkörper oder eine Rotorstruktur 139 eines Rotors 137 ist drehfest mit der Werkzeugspindel 112 verbunden. Die Rotorstruktur 139 ist becherartig. Ein unterer, plattenartiger Bereich 141 der Rotorstruktur 139 wird von dem unteren Endabschnitt 148 der Werkzeugspindel 112 durchdrungen und ist mit dieser drehfest verbunden. Von einem Außenumfangsbereich des Platten-Bereichs 141 erstreckt sich ein Umfangsabschnitt 140 in der Art einer Umfangswandung weg.

Der Rotor 137 ist ein Außenläufer-Rotor. An einem Innenumfang des Umfangsabschnitts 140 sind Magnete 138 angeordnet, die der Erregerspulenanordnung 133 gegenüberliegen. Ein Luftspalt 143 zwischen der Erregerspulenanordnung 133 und den Magneten 138, beispielsweise Permanentmagneten, hat einen großen Durchmesser. Der Durchmesser ist zudem dadurch vergrößert, dass die Werkzeugspindel 112 in einem Innenraum des Motors 111 angeordnet ist, sodass der Durchmesser des Stators 134 groß ist. Dadurch kann der Motor 111 ein großes Drehmoment entwickeln. Ein Getriebe ist nicht erforderlich.

Der Innenraum 129 der Statorstruktur 128 ist durch einen Deckel 166 des Gehäuses 121 verschlossen.

Eine beispielsweise in dem Deckel 166 angeordnete Bestromungseinrichtung 136 bestromt den Motor 111, der ein bürstenloser, elektronisch kommutierter Motor ist.

Die Statorstruktur 128 bildet einen Bestandteil des Gehäuses 121 der Handwerkzeugmaschine 110. Eine in der Zeichnung obere, ringartige Wand 132 der Statorstruktur 128 ist an einem oberen Endbereich der Umfangswandung 131 angeordnet. Die Wand 132 hat einen kreisförmigen Außenumfang. Die Wand 132 bildet eine Stirnwand des Gehäuses der Handwerkzeugmaschine 110.

Ein Gehäuseteil 152 mit einer Umfangswand 153 sowie einer werkzeugseitigen Stirnwand 154 bildet einen weiteren Bestandteil des Gehäuses 121. Die Stirnwand 154 wird an einer Öffnung 155 von der Werkzeugspindel 112 durchdrungen. Die Umfangswand 153 stößt an die stirnseitige Wand 132 der Statorstruktur 128 an. In einem durch das becherartige Gehäuseteil 152 und die Statorstruktur 128 begrenzten Innenraum 149 ist der Stator 134 angeordnet.

Der Motor 111 umfasst ein z.B. am Rotor 137 vorgesehenes Lüfterrad 156 zur Erzeugung eines Motor-Kühlluftstromes 164 zur Kühlung des Motors 111. An einem unteren, plattenartigen Bereich 141 der Rotorstruktur 139 sind Rippen 170 des Lüfterrades 156 angeordnet. Der Kühlluftstrom 164 tritt an Öffnungen 165 des Gehäuses 121 in den Innenraum 149 ein, durchströmt den Stator 134 und strömt dann durch Öffnungen 171 aus dem Gehäuse 121 aus. Die Öffnungen 165 sind im Bereich der Wand 132 an der Umfangswand 153 angeordnet, sodass die Kühlluft 164 von radial außen in den Innenraum 149 einströmen kann. Die Öffnungen 171 sind an der Umfangswand 153 im Bereich der Rippen 170 des Lüfterrades 156 angeordnet. Zwischen den Eintritts-Öffnungen 165 und den Austritts-Öffnungen 171 bildet der Innenraum 149 einen Kühlkanal 167 einer Motor-Kühlluftführung 168 zur Kühlung des Motors 111.

Eine Handwerkzeugmaschine 210 ist beispielsweise ein Schrauber oder eine Bohrmaschine. Eine Werkzeugspindel 212 wird durch einen bürstenlosen, zweckmäßigerweise elektronisch kommutierten Motor 211 über ein Getriebe 280 angetrieben. Das Getriebe 280 ist ein Planetengetriebe. Am vorderen, in der Zeichnung unteren Endabschnitt 248 der Werkzeugspindel 212 ist eine Werkzeugaufnahme 213 angeordnet, beispielsweise eine Art Bohrfutter oder eine Steckaufnahme, in der ein Werkzeug 214 befestigbar ist, beispielsweise ein Schraubwerkzeug 215.

Das Getriebe 280 und der Motor 211 sind vorteilhaft konzentrisch. Auch die Werkzeugspindel 212 und die Werkzeugaufnahme 213 und der Motor 211 sind konzentrisch.

Der Motor 211 ist in einem in der Zeichnung unteren, der Werkzeugaufnahme 213 näheren Teil 209 eines Gehäuses 221 der Handwerkzeugmaschine 210 angeordnet, während das Getriebe 280 von der Werkzeugaufnahme 213 entfernt in einem in der Zeichnung oberen Teil 208 des Gehäuses 221 positioniert ist.

Die Werkzeugspindel 212 durchsetzt den Motor 211 und das Getriebe 280. Ein mittlerer Abschnitt 247 der Werkzeugspindel 212 ist in einem Innenraum 229 eines Statorkörpers oder einer Statorstruktur 228 des Motors 211 angeordnet. Der mittlere Abschnitt 247 steht in der Zeichnung nach oben vor die Statorstruktur 228 vor und geht mit einer Stufe in einen oberen Abschnitt 246 der Werkzeugspindel 212 über. Die Werkzeugspindel 212 bildet eine Abtriebswelle 242 des Getriebes 280.

Die Werkzeugspindel 212 ist mit einer Werkzeugspindel-Lagerung 222 um eine Drehachse 224 drehbar bezüglich des Gehäuses 221 gelagert. Ein oberes Werkzeugspindel-Lager 250 am oberen Endabschnitt 245 der Werkzeugspindel 212 ist an einem Getriebegehäuse 281 des Getriebes 280 drehbar gelagert. Das Getriebegehäuse 281 sitzt drehfest an einer Umfangswand 253 eines oberen Gehäuseteils 252 des Gehäuses 221. Ein mittleres Werkzeugspindel-Lager 250a der Werkzeugspindel-Lagerung 222 am mittleren Abschnitt 247 der Werkzeugspindel 212 stützt sich an der Statorstruktur 228 ab, beispielsweise an einer Aufnahme an einer Umfangswandung 231 der Statorstruktur 228.

Die Statorstruktur 228 bildet eine Art Stufenzylinder, deren oberer Endbereich erweitert ist und die Aufnahme für das mittlere Werkzeugspindel-Lager 250a bereitstellt. Ein unterer Endbereich 230 der Statorstruktur 228 weist eine Aufnahme 232 für ein unteres Werkzeugspindel-Lager 251 auf.

Eine Erregerspulenanordnung 233 eines Stators 234 des Motors 211 sitzt an einem Außenumfang der Umfangswandung 231 der Statorstruktur 228. Dort ist beispielsweise ein Blechpaket 235 angeordnet, an dem Erregerspulen der Erregerspulenanordnung 233 sitzen. Die Erregerspulenanordnung 233 wird durch eine Bestromungseinrichtung 236 bestromt und erzeugt ein Drehfeld zum Antreiben eines Rotors 237 des Motors 211. Der Rotor 237 ist ein Außenläufer-Rotor. Magnete 238 des Rotors 237, beispielsweise Permanentmagnete, sind an einem Umfangsabschnitt 240 eines Rotorkörpers oder einer Rotorstruktur 239 angeordnet. Ein Luftspalt 243 zwischen dem Stator 234 und den Magneten 238 des Rotors 237 weist einen verhältnismäßig großen Durchmesser auf, sodass der Motor 211 ein hohes Drehmoment entwickeln kann. Dadurch ist es möglich, dass das Getriebe 280 verhältnismäßig kompakt baut.

Der Rotor 237 ist mit einer Rotorlagerung 220 an der Werkzeugspindel 212 drehbar gelagert. Ein oberes Rotorlager 225 sitzt an einer Stufe zwischen dem oberen Abschnitt 246 der Werkzeugspindel 212 und dem mittleren Abschnitt 247, der einen größeren Durchmesser aufweist als der obere Abschnitt 246. Ein unteres Rotorlager 226 sitzt am mittleren Abschnitt 247. Die Lager 250a, 226 sind nebeneinander an der Werkzeugspindel 212 angeordnet. Zwischen den Lagern 226, 250a ist ein Distanz- und/oder Haltelement, z.B. ein Sprengring 227, angeordnet.

Ein oberer Bereich 241 des Rotors 237, beispielsweise der Rotorstruktur 239, bildet einen Hohlwellenabschnitt 216. In einem Innenraum 217 des Hohlwellenabschnitts 216 verläuft die Werkzeugspindel 212. In diesem Innenraum 217 sind die beiden Rotorlager 225, 226 angeordnet. Der Hohlwellenabschnitt oder die Hohlwelle 216 bildet eine Abtriebswelle des Motors 211.

An einem oberen Endabschnitt des Rotors 237 ist ein Sonnenrad 282 des Getriebes 280 angeordnet. Das Sonnenrad 282 ist vorteilhaft einstückig durch die Rotorstruktur 239 gebildet. Das Sonnenrad 282 kämmt mit Planetenrädern 283, die wiederum mit einem Hohlrad 284 des Planeten-Getriebes 280 kämmen. Das Hohlrad 284 ist an einer Umfangswand 285 des Getriebegehäuses 281 gelagert. Die Planetenräder 283 sind an einem Planetenträger 287 drehbar angeordnet, der drehfest mit dem oberen Abschnitt 246 der Werkzeugspindel 212 verbunden ist. Beispielsweise sind die Planetenräder 283 an Drehwellen 286 angeordnet, die drehbar an dem Planetenträger 287 gelagert sind und/oder die Planetenräder 283 sind drehbar an den Wellen 286 gelagert, die dann am Planetenträger 287 drehfest sein können. Die Drehwellen 286 sind parallel zu der Drehachse 224.

Das Lager 225 sowie daran anschließend der Planetenträger 287, der mit einem vorstehenden, hülsenartigen Abschnitt an das Lager 225 angrenzt, sowie das obere Lager 250, das auf einem oberen, vorstehenden, hülsenartigen Abschnitt des Planetenträgers 287 sitzt, sind mit einer Spindelmutter 249 gegen die Stufe zwischen den Abschnitten 246, 247 gespannt.

Zwischen dem Hohlwellenabschnitt 216 sowie dem die Magnete 238 tragenden Abschnitt der Rotorstruktur 239 ist ein Lüfterrad 256 angeordnet. Das Lüfterrad 256 bildet einen Bestandteil der Rotorstruktur 239. Das Lüfterrad 256 erzeugt einen Motor-Kühlluftstrom 259, der an Öffnungen 260 in den Motor 211 eindringt. Die Öffnungen 260 sind an einer unteren Stirnwand 254 des Gehäuses 221 angeordnet. Beispielsweise erstreckt sich die Erregerspulenanordnung 233 bis in die Öffnungen 260 hinein.

In den Erregerspulen der Erregerspulenanordnungen 233 verlaufen zweckmäßigerweise parallel zur Drehachse 224 Kühlkanäle 262 einer Motor-Kühlluftführung 263. Der Motor-Kühlluftstrom 259 kühlt unmittelbar die Erregerspulenanordnung 233. Aus den Kühlkanälen 262 austretende Kühlluft 259 wird von Rippen 265 des Lüfterrades 256 nach radial außen durch Öffnungen 260 an einer Umfangswandung 257 des Teils 209 des Gehäuses 221 ausgeblasen. Die Öffnungen 266 sind etwa an einem mittleren Bereich des Gehäuses 221 angeordnet.

Das Lüfterrad 256 erzeugt ferner einen Getriebe-Kühlluftstrom 270. Der Getriebe-Kühlluftstrom 270 tritt an Öffnungen 271 am von der Werkzeugaufnahme 213 entfernten Endbereich des Gehäuses 221 in Kühlkanäle 272 einer Getriebe-Kühlluftführung 275 ein. Die Kühlkanäle 272 verlaufen entlang des Getriebes 280, beispielsweise in der Umfangswand 253 des oberen Gehäuseteils 252. Somit durchströmt die Kühlluft 270 das Getriebe 280 nicht unmittelbar, sondern an seinem Außenumfang. Dadurch kann das Getriebe 280 nicht verschmutzen. Die Kühlluft 270 strömt aus dem Kühlkanal 272 im Bereich des Lüfterrades 256 aus. Rippen 273 des Lüfterrades 256 fördern die Kühlluft 270 nach radial außen durch Öffnungen 274 des Gehäuses 221 aus dem Innenbereich des Gehäuses 221 heraus. Die Öffnungen 274 und 266 sind unmittelbar nebeneinander angeordnet.

Zwischen dem Getriebe 280 und dem Lüfterrad 256 ist eine Dichtung 244, beispielsweise eine Ringdichtung, angeordnet. Die Dichtung 244 verhindert, dass Kühlluft, die möglicherweise Schmutz enthält, in das Getriebe 280 eindringt. Die Dichtung 244, beispielsweise ein O-Ring, sitzt an einem Innenumfang der Umfangswand 253 unmittelbar im Bereich einer Stufe zwischen der einen kleineren Durchmesser aufweisenden oberen Umfangswand 253 und der einen größeren Durchmesser aufweisenden unteren Umfangswand 257.

Der obere Gehäuseteil 252 bildet beispielsweise eine Art Handgriff 258. Unmittelbar unterhalb dieses Handgriffes 258 sind die Luftaustrittsöffnungen 266, 274 angeordnet. Warme Luft strömt somit nicht im Bereich des Handgriffes 258. Ferner sorgt die Getriebe-Kühlluft 270 für eine Kühlung des Abschnittes des Handgriffs 258.

Das Gehäuse 221 ist oben mit einem Deckel 261 verschlossen.

Der untere Endbereich 230 der Statorstruktur 228 durchdringt eine Öffnung 255 an der unteren Stirnwand 254 des Gehäuses 221.

Das Lüfterrad 256 bildet eigentlich ein Lüfterradpaar, das mit den Rippen 273 den Getriebe-Kühlluftstrom 270 und mit den Rippen 265 den Motor-Kühlluftstrom 259 erzeugt.

Das Getriebe 280 ist in dem Handgriffbereich oder Handgriff 258 angeordnet. Der verhältnismäßig viel Abwärme entwickelnde Motor 211 ist davon entfernt nahe bei der Werkzeugaufnahme 213 positioniert. Die Ausblas-Öffnungen 274 und 266 sind unterhalb des Handgriffs 258 angeordnet.

## Patentansprüche

1. Handwerkzeugmaschine mit einem bürstenlosen, einen Rotor (37; 137; 237) und einen Stator (34; 134; 234) aufweisenden Motor (11; 111; 211) zum Antreiben einer Werkzeugspindel (12; 112; 212) mit einer Werkzeugaufnahme (13; 113; 213) zur Aufnahme eines Werkzeugs (14), **dadurch gekennzeichnet, dass** der Rotor (37; 137; 237) ein bezüglich des Stators (34; 134; 234) außen angeordneter Außenläufer-Rotor (37; 137; 237) ist.

2. Handwerkzeugmaschine nach Anspruch 1, **dadurch gekennzeichnet, dass** der Rotor (37; 137; 237) die Werkzeugspindel (12; 112; 212) direkt antreibt.

3. Handwerkzeugmaschine nach Anspruch 1 oder 2, **dadurch gekennzeichnet, dass** sie ein zwischen den Motor (11; 111; 211) und die Werkzeugspindel (12; 112; 212) geschaltetes Getriebe (280) aufweist.

4. Handwerkzeugmaschine nach Anspruch 3, **dadurch gekennzeichnet, dass** das Getriebe (280) ein Planetengetriebe (280) ist, und dass der Rotor (37; 137; 237) mit einem Sonnenrad (282) oder einem Planetenträger (287) des Planetengetriebes drehgekoppelt ist oder das Sonnenrad (282) oder den Planetenträger (287) umfasst.

5. Handwerkzeugmaschine nach Anspruch 3 oder 4, **dadurch gekennzeichnet, dass** die Werkzeugaufnahme (13; 113; 213) und das Getriebe (280) an einander entgegengesetzten Seiten des Stators (34; 134; 234) angeordnet sind.

6. Handwerkzeugmaschine nach einem der vorhergehenden Ansprüche, **dadurch gekennzeichnet, dass** die Werkzeugspindel (12; 112; 212) und/oder die Werkzeugaufnahme (13; 113; 213) zumindest teilweise in einem Innenraum (129; 229) des Stators (34; 134; 234) angeordnet ist.

7. Handwerkzeugmaschine nach einem der vorhergehenden Ansprüche, **dadurch gekennzeichnet, dass** der Motor (11; 111; 211) eine Hohlwelle (16; 116; 216) aufweist.

8. Handwerkzeugmaschine nach Anspruch 7, **dadurch gekennzeichnet, dass** die Hohlwelle (16; 116; 216) eine Abtriebswelle (142; 242) des Motors (11; 111; 211) bildet.

9. Handwerkzeugmaschine nach Anspruch 7 oder 8, **dadurch gekennzeichnet, dass** die Werkzeugspindel (12; 112; 212) und/oder die Werkzeugaufnahme (13; 113; 213) zumindest teilweise in einem Innenraum (17) der Hohlwelle (16; 216) angeordnet sind oder zumindest teilweise durch die Hohlwelle (116) gebildet sind.

10. Handwerkzeugmaschine nach Anspruch 9, **dadurch gekennzeichnet, dass** eine Werkzeugspindel-Lagerung (22; 122, 222) für die Werkzeugspindel (12; 112; 212) mindestens ein an einem Außenumfang (53) der Hohlwelle (16; 116; 216) angeordnetes Werkzeugspindel-Lager (50, 51; 51') umfasst.

11. Handwerkzeugmaschine nach einem der vorhergehenden Ansprüche, **dadurch gekennzeichnet, dass** die Werkzeugspindel (12; 112; 212) an einer zumindest teilweise an dem Stator (34; 134; 234) angeordneten Werkzeugspindel-Lagerung (22; 122, 222) drehbar gelagert ist.

12. Handwerkzeugmaschine nach einem der vorhergehenden Ansprüche, **dadurch gekennzeichnet, dass** die Erregerspulenanordnung (33; 133; 233) an einem Außenumfang einer rohrartigen Statorstruktur (28; 128; 228) angeordnet ist.

13. Handwerkzeugmaschine nach einem der vorhergehenden Ansprüche, **dadurch gekennzeichnet, dass** die Werkzeugspindel-Lagerung (22; 122, 222) und eine Erregerspulenanordnung (33; 133; 233) des Stators (34; 134; 234) etwa dieselbe Längsposition in der Handwerkzeugmaschine (10) aufweisen.

14. Handwerkzeugmaschine nach einem der vorhergehenden Ansprüche, **dadurch gekennzeichnet, dass** sie mindestens ein an der Werkzeugspindel (12; 112; 212) oder dem Rotor (37; 137; 237) angeordnetes Lüfterrad (56; 156; 256) zur Kühlung der Handwerkzeugmaschine (10) und/oder zur Absaugung von Staub von einer durch die Handwerkzeugmaschine (10) bearbeiteten Fläche (f) aufweist.

15. Handwerkzeugmaschine nach Anspruch 14, **dadurch gekennzeichnet, dass** das mindestens eine Lüfterrad (56; 156; 256) oder ein Lüfterradpaar zum Ansaugen von durch ein Getriebe (280) geführter Getriebe-Kühlluft (270) und den Motor (11; 111; 211) geführter Motor-Kühlluft (64; 164; 264) zwischen dem Motor (11; 111; 211) und dem Getriebe (280) angeordnet ist.

16. Handwerkzeugmaschine nach einem der vorhergehenden Ansprüche, **dadurch gekennzeichnet, dass** sie eine Motor-Kühlluftführung (68) zur Kühlung des Motors (11; 111; 211) aufweist, und dass die Motor-Kühlluftführung (68) die Motor-Kühlluft (64; 164; 264) an dem Stator (34; 134; 234) vorbeiführt oder durch den Stator (34; 134; 234) hindurchführt.

17. Handwerkzeugmaschine nach einem der vorhergehenden Ansprüche, **dadurch gekennzeichnet, dass** sie eine Getriebe-Kühlluftführung (275) zur Kühlung eines Getriebes (280) aufweist.

18. Handwerkzeugmaschine nach einem der vorhergehenden Ansprüche, **dadurch gekennzeichnet, dass** der Rotor (37; 137; 237) an einer becherartigen oder ringartigen Rotorstruktur (39, 39'; 139; 239) angeordnete Magnete (38; 138; 238) aufweist.

19. Handwerkzeugmaschine nach einem der vorhergehenden Ansprüche, **dadurch gekennzeichnet, dass** der Rotor (237) einen Hohlwellenabschnitt (216) aufweist, in dem zumindest ein Abschnitt der Werkzeugspindel (212) angeordnet ist.

20. Handwerkzeugmaschine nach einem der vorhergehenden Ansprüche, **dadurch gekennzeichnet, dass** der Rotor (237) drehbar an der Werkzeugspindel (212) gelagert ist.
